# EUROPEAN PATENT APPLICATION

(11) **EP 1 362 747 A2**
(43) Date of publication of application: **19.11.2003**
(21) Application number: 03004275.8
(22) Date of filing: 26.02.2003
(51) Int. Cl.: B60R 21/01

(54) **Method for improving expansion performance of air bag**

(30) Priority: 16.05.2002 KR 2002027189
(71) Applicant: KIA MOTORS CORPORATION, Seoul 137-938 (KR)
(72) Inventor: Kim, Hoon, Gyeonggi-do 423-050 (KR)
(74) Representative: Viering, Jentschura & Partner

(57) **Abstract**

Disclosed is a method for improving an expansion performance of an air bag. The method includes the steps of: detecting a variation of a deceleration of a vehicle in a vehicle collision at a deceleration detector and applying the detected deceleration signal to a microcomputer; analyzing a collision waveform generated according to the deceleration signal and determining an impact degree of the vehicle at the microcomputer; temporarily stopping an operation of the deceleration detector at the microcomputer while the collision waveform is increasing; initializing an initial collision waveform in a state that the operation of the deceleration detector is stopped, the initial collision waveform being inputted before the microcomputer stops the operation of the deceleration detector; re-operating the deceleration detector at the microcomputer, detecting again a variation of the deceleration of the vehicle at the deceleration detector, and applying the newly detected deceleration signal to the microcomputer; and when the collision waveform generated according to the applied deceleration signal reaches a set value, operating an air bag driving unit at the microcomputer to thereby expand the air bag. According to the method of present invention, the detecting operation of the deceleration detector is temporarily stopped after the vehicle collision, and the initially recognized collision waveform is initialized. Then, the deceleration detector re-operates to allow the newly detected deceleration signal to be applied, so that the expansion time of the air bag is reduced. Accordingly, the expansion time of the air bag is closer to a required time to fire (RTTF), thereby achieving a more stable expansion performance of the air bag.

## Description

### BACKGROUND OF THE INVENTION

### Field of the Invention

The present invention relates to a method for improving an expansion performance of an air bag, and, more particularly, to a method for improving an expansion performance of an air bag, in which the air bag is expanded at an exact time by controlling a collision waveform generated when a vehicle collides.

### Background of the Prior Art

Generally, vehicles have air bag systems used as a safety device for protecting the lives of driver and passengers in preparation for collision accidents. In the air bag systems, when the vehicles collide, the air bag is expanded with gas between a driver and a steering handle and between an assistant passenger and an instrument panel, and thus an impact due to the collision is absorbed, thereby securing the safety of the passengers.

Describing an operation of the air bag system in more detail, a vehicle's speed decelerates when the collision accident occurs and a deceleration detector detects the deceleration. Then, the deceleration detector provides the detected deceleration signal to a microcomputer and the microcomputer determines an impact degree of the vehicle according to the detected deceleration signal. Meanwhile, the deceleration detector utilizes units such as an air bag sensor.

The microcomputer analyzes the collision waveform generated when the vehicle collides. As the analysis result, if a degree of a maximum deceleration is more than a set value, an air bag driving unit is operated. At this time, nitrogen gas is exploded, thus expanding the air bag installed inside the vehicle.

In such an air bag system, the microcomputer operates the air bag driving unit using only the deceleration signal, i.e., the impact degree of the vehicle, provided from the deceleration detector. Therefore, the air bag system considers no deviation in view of a collision type of the vehicle or a movement degree and a deformation degree of the vehicle due to the impact of the collision. Since the deviation can actually affect an expansion time of the air bag such that there occurs a problem of expanding the air bag too early or too late. As a result, the driver and the passengers cannot be adequately protected at the dangerous moment when the deceleration reaches the maximum value.

Additionally, a required time to fire (RTTF) (a required expansion time of the air bag), which is required for an appropriate expansion of the air bag at the moment of the collision, is applied to the conventional air bag system. The RTTF is directly linked with the expansion performance of the air bag and it is an important factor of an evaluation standard when stability and performance of the air bag system are actually tested.

Following items are generally applied to the test for evaluating the expansion performance of the air bag: a collision test in which a vehicle collides with a wall of 0° to 30° at a speed of 8 mph (mile per hour) to 35 mph, a collision test in which a vehicle collides with a pillar at a speed of 19 mph to 30 mph, and a test in which a vehicle is crushed under the other party's vehicle (e.g., a truck or a large-sized bus). In other words, the evaluation test can be carried out under various conditions, such as different speed of the vehicle, different kinds and installation angles of obstacles, etc.

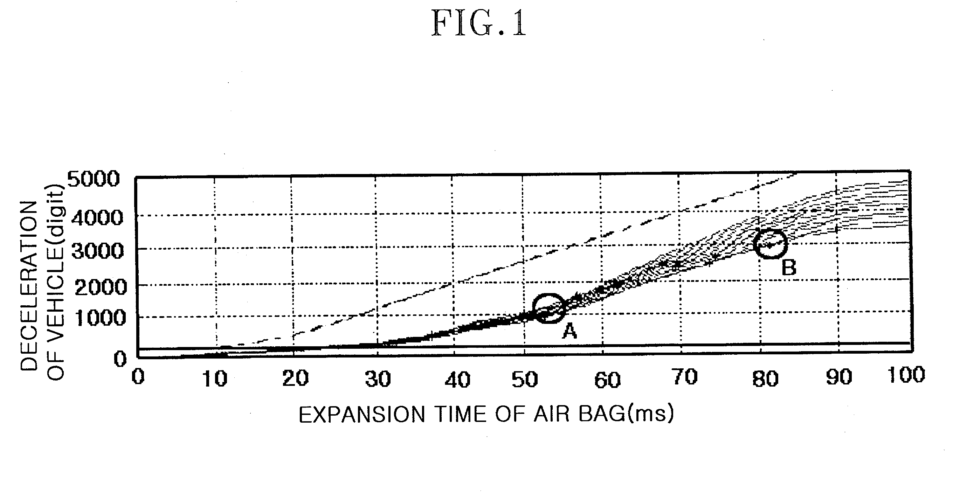

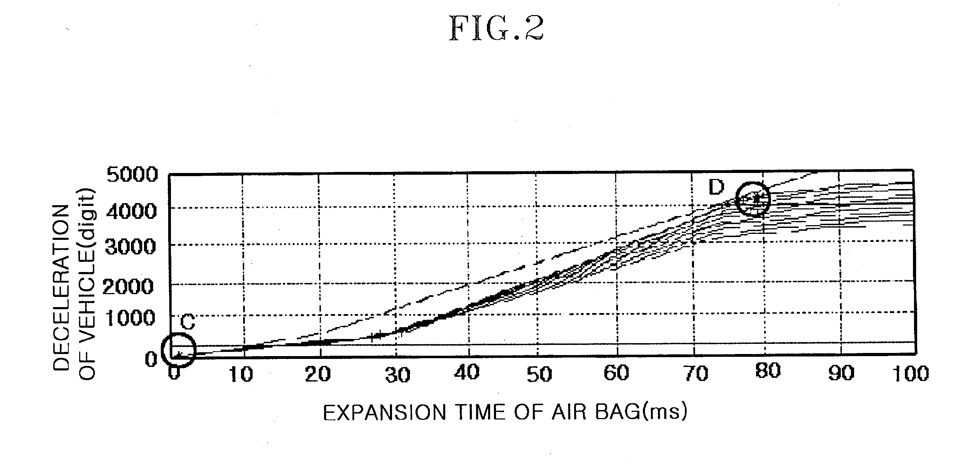

Fig. 1 exemplarily shows a collision waveform according to an expansion performance of the conventional air bag, and Fig. 2 exemplarily shows another collision waveform according to an expansion performance of the conventional air bag. In Figs. 1 and 2, there are shown the measurement result of an expansion time of the air bag with respect to a deceleration of the vehicle in the conventional air bag system when the collision test is carried out under different conditions.

In more detail, in Fig. 1, there is shown the case that the vehicle collides head-on with a pillar at the speed of 19 mph, among the items of the test for evaluating the expansion performance of the air bag. Several repeated tests show that a minimum expansion time of the air bag is a point "A", i.e., 53 ms, and a maximum expansion time of the air bag is a point "B", i.e., 82 ms.

In the collision test of Fig. 1, the RTTF which is an actual standard is 50.2 ms. However, as can be seen from the collision waveform measured in the actual collision test, the conventional air bag system has a large derivation in the expansion time of the air bag and also exceeds greatly the RTTF.

In Fig. 2, there is shown the case that a vehicle collides with a truck or a large-sized bus at a speed of 20 mph and is crushed under the truck or the large-sized bus. Several repeated tests show that a minimum expansion time of the air bag is a point "C", i.e., 0 ms, and a maximum expansion time of the air bag is a point "B", i.e., 79 ms.

In the collision test of Fig. 2, the RTTF which is an actual standard is 48.7 ms. However, as can be seen from the collision waveform measured in the actual collision test, the expansion time of the air bag according to the convention air bag system is greatly changed and very unstable.

Meanwhile, although not shown in the drawings, in another items for testing the expansion performance of the air bag, i.e., the collision test in which a vehicle collides with a wall of 0° to 30° at a speed of 8 mph to 35 mph, it is measured that the expansion time of the air bag with respect to the deceleration of the vehicle is close to the RTTF.

As described above, the conventional air bag system does not work its own function since the expansion time of the air bag with respect to the deceleration of the vehicle exceeds or does not reach the RTTF, as shown in the collision waveform generated in the vehicle collision. Therefore, if the vehicle collision actually occurs, the passengers as well as the driver cannot be safely protected.

### SUMMARY OF THE INVENTION

Accordingly, the present invention is directed to a method for improving an expansion performance of an air bag that substantially obviates one or more problems due to limitations and disadvantages of the related art.

It is an object of the present invention to provide a method for improving an expansion performance of an air bag, in which a detecting operation of a deceleration detector is temporarily stopped after the vehicle collision, and an initially recognized collision waveform is initialized. Then, the deceleration detector re-operates and applies a newly detected deceleration to a microcomputer, thus reducing the expansion time of the air bag. Accordingly, the expansion time of the air bag is closer to the RTTF, such that a more stable expansion performance can be achieved.

To accomplish the above object and other advantages, there is provided a method for improving an expansion performance of an air bag. The method includes the steps of: detecting a variation of a deceleration of a vehicle in a vehicle collision at a deceleration detector and applying the detected deceleration signal to a microcomputer; analyzing a collision waveform generated according to the deceleration signal and determining an impact degree of the vehicle at the microcomputer; temporarily stopping an operation of the deceleration detector at the microcomputer while the collision waveform is increasing; initializing an initial collision waveform in a state that the operation of the deceleration detector is stopped, the initial collision waveform being inputted before the microcomputer stops the operation of the deceleration detector; re-operating the deceleration detector at the microcomputer, detecting again a variation of the deceleration of the vehicle at the deceleration detector, and applying the newly detected deceleration signal to the microcomputer; and when the collision waveform generated according to the applied deceleration signal reaches a set value, operating an air bag driving unit at the microcomputer to thereby expand the air bag, whereby an expansion time of the air bag is reduced and close to a required time to fire (RTTF).

The step (b) further includes the step of determining whether or not the collision waveform reaches a set time range after a predetermined time elapses from a moment when the microcomputer starts to recognize the initial collision waveform.

The step (c) is carried out when the collision waveform reaches the set time range after the microcomputer starts to recognize the collision waveform.

The step (e) is carried out when the deceleration of the vehicle reaches 0 velocity digit.

Preferably, it is desirable that the set time range be 20 ms to 30 ms.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

Fig. 1 exemplarily shows a collision waveform according to an expansion performance of a conventional air bag;

Fig. 2 exemplarily shows another collision waveform according to an expansion performance of the conventional air bag;

Fig. 3 is a view structurally illustrating a method for improving an expansion performance of an air bag in accordance with the present invention;

Fig. 4 is a flowchart illustrating the method for improving an expansion performance of an air bag in accordance with the present invention;

Fig. 5 is a graph showing a result obtained when the method of the present invention is carried out; and

Fig. 6 is a graph showing another result obtained when the method of the present invention is carried out.

### DETAILED DESCRIPTION OF THE PREFERRED EMBODIMENTS

Reference will now be made in detail to a preferred embodiment of the present invention.

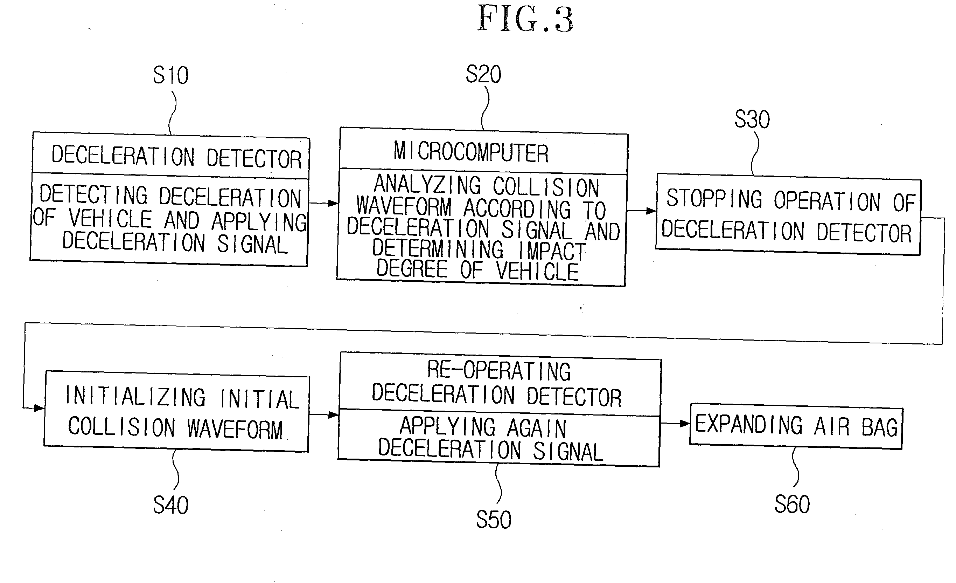

Fig. 3 is a view structurally illustrating a method for improving an expansion performance of an air bag in accordance with the present invention. According to the method of the present invention, the air bag is expanded at a time close to the RTTF to the maximum when a vehicle collides, thereby minimizing damages of a driver and passengers, which are caused by a delayed expansion of the air bag.

For this, there is applied a method in which an operation of a deceleration detector for recognizing a collision waveform in a vehicle collision is stopped for a predetermined time to initialize the recognized collision waveform, and then the deceleration detector re-operates.

A construction for improving the expansion performance of the air bag in accordance with the present invention will be described with reference to Fig. 3.

When a vehicle collides, the deceleration detector detects a variation of the deceleration of the vehicle and applies the detected deceleration signal to a microcomputer (S10). As time goes by, the deceleration of the vehicle due to the collision gradually increases in the waveform. The microcomputer analyzes the inputted collision waveform to determine the impact degree of the vehicle (S20). Then, while the collision waveform is increasing, the microcomputer temporarily stops the operation of the deceleration detector (S30). In a state that the operation of the deceleration detector is stopped, the microcomputer initializes an initial deceleration signal, which is recognized before the operation of the deceleration detector is stopped (S40). After a predetermined time elapses, the microcomputer re-operates the deceleration detector. Thus, the deceleration detector again detects a variation of the deceleration of the vehicle and applies the newly detected deceleration signal to the microcomputer (S50). The newly applied deceleration signal gradually increases in the waveform. At this time, if the collision waveform reaches a set value, the microcomputer operates an air bag driving unit of the air bag system to thereby expand the air bag (S60).

As described above, according to the present invention, the detecting operation of the deceleration detector is temporarily stopped after the vehicle collision, and the initially recognized collision waveform is initialized. Then, the deceleration detector re-operates and applies the newly detected deceleration signal to the microcomputer, thereby reducing the expansion time of the air bag. Accordingly, the expansion time of the air bag is closer to the RTTF, thereby achieving a more stable expansion performance of the air bag.

Hereinafter, the method for improving the expansion performance of the air bag in accordance with the present invention will be described in detail.

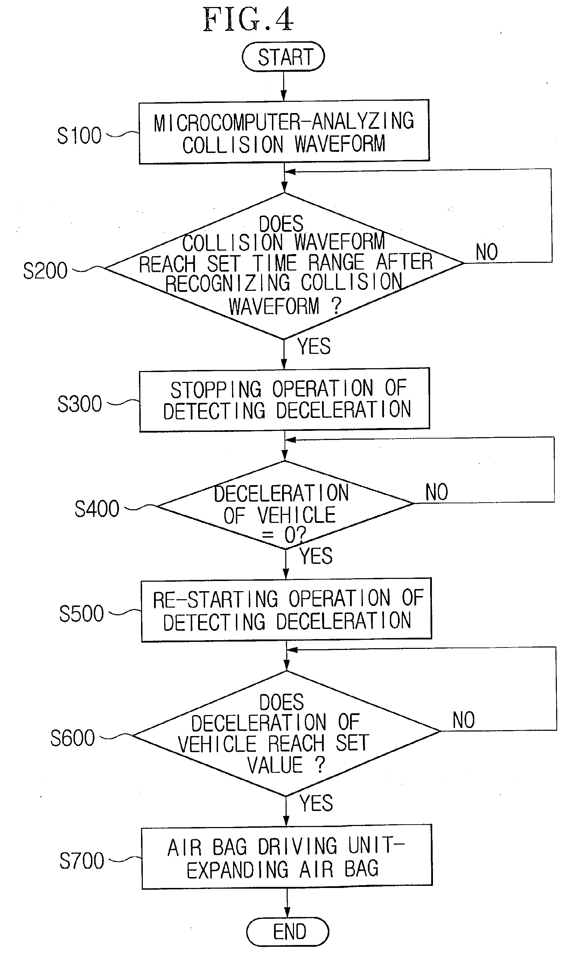

Fig. 4 is a flowchart illustrating the method for improving the expansion performance of the air bag in accordance with the present invention. The method of the present invention will be described centrally about the steps shown in Fig. 3, i.e., the step (S20) of analyzing the collision waveform and determining the impact degree of the vehicle by the microcomputer, the step (S30) of stopping the operation of the deceleration detector, the step (S40) of initializing the initial deceleration signal, the step (50) of re-operating the deceleration detector to apply again the newly detected deceleration signal, and the step (S60) of expanding the air bag by the microcomputer.

Referring to Fig. 4, after the vehicle collision, the microcomputer recognizes and analyzes the collision waveform according to the deceleration of the vehicle, which is applied from the deceleration detector (S100). After a predetermined time elapses from a moment when the microcomputer starts to recognize the initial collision waveform, the microcomputer determines whether or not the collision waveform reaches a set time range (S200). In that case, if an initial moment when the deceleration of the vehicle is detected by the deceleration detector is considered to be 0 ms, it is desirable that the set time range be set to a range of 20 ms to 30 ms.

If the collision waveform reaches the set time range after the microcomputer starts to recognize the collision waveform, the detecting operation of the deceleration detector is stopped and the microcomputer initializes the initially recognized collision waveform (S300).

After a predetermined time elapses, the microcomputer determines whether or not the vehicle's deceleration detected by the deceleration detector reaches 0 velocity digit (1000 velocity digit = 460G) (S400).

If the vehicle's deceleration reaches 0 velocity digit, the microcomputer re-operates the deceleration detector to restart the operation of detecting the deceleration of the vehicle according to the vehicle collision (S500).

Thereafter, the microcomputer analyzes the collision waveform according to the variation of the deceleration applied from the deceleration detector and determines whether or not the collision waveform reaches the set value (S600).

If the collision waveform reaches the set value, the microcomputer operates the air bag driving unit to expand the air bag (S700).

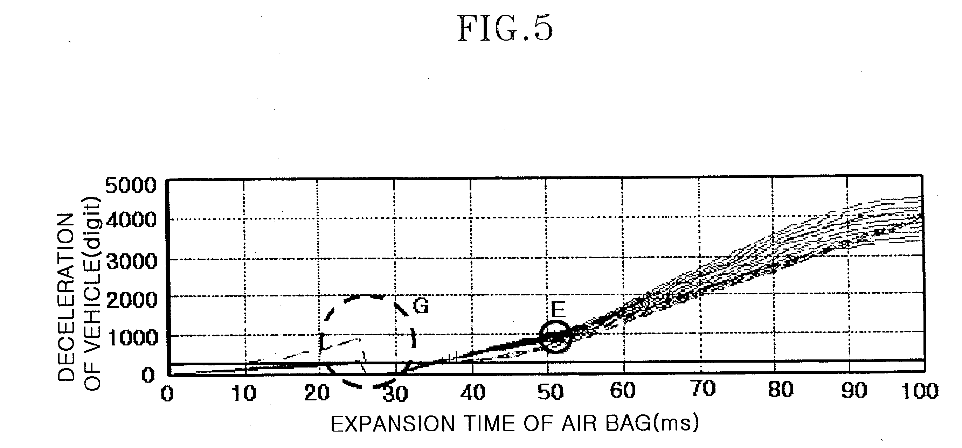

Fig. 5 is a graph showing an exemplary application of the method in accordance with the present invention, which illustrates a result obtained when the method of the present invention is carried out in case that the vehicle collides head-on with a pillar at a speed of 19 mph among the above-described items.

In that case, several repeated tests show that a minimum expansion time of the air bag is a point "E", i.e., 50 ms, and a maximum expansion time of the air bag is 53 ms. Compared with the conventional air bag system having the minimum expansion time of 53 ms and the maximum expansion time of 82 ms, the expansion time of the air bag according to the present invention is much closer to the RTTF (50.2 ms). In Fig. 5, an undescirbed reference symbol "G" shows that the collision waveform decreases when the operation of the deceleration detector is stopped within the set time range of 20 ms to 30 ms.

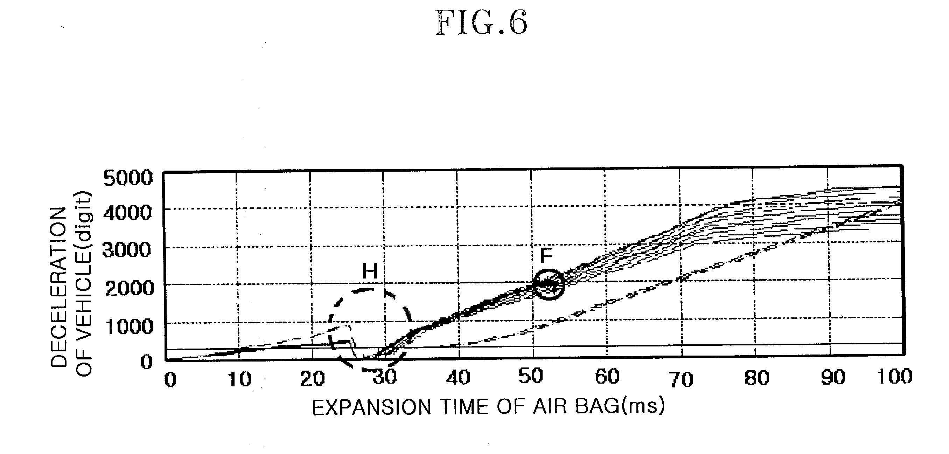

Fig. 6 is a graph showing another exemplary application of the method in accordance with the present invention, which illustrates a result obtained when the method of the present invention is carried out in case that the vehicle collides with a bus or a truck at a speed of 20 mph and is crushed under the bus or the truck.

In that case, several repeated tests show that a minimum expansion time of the air bag is a point "F", i.e., 51 ms, and a maximum expansion time of the air bag is 53 ms. Compared with the conventional air bag system having the minimum expansion time of 0 ms and the maximum expansion time of 79 ms, the expansion time of the air bag according to the present invention is much closer to the RTTF (48.7 ms). In addition, the air bag system of the present invention is very stable since there is almost no variation in the expansion time of the air bag. An undescirbed reference symbol "H" shows that the collision waveform decreases when the operation of the deceleration detector is stopped within the set time range of 20 ms to 30 ms.

As described above, according to the present invention, the detecting operation of the deceleration detector is temporarily stopped after the vehicle collision, and the initially recognized collision waveform is initialized. Then, the deceleration detector re-operates, thereby reducing the expansion time of the air bag. Accordingly, the expansion time of the air bag is closer to the RTTF, thereby achieving a more stable expansion performance of the air bag.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A method for improving an expansion performance of an air bag, the method comprising the steps of:
(a) detecting a variation of deceleration of a vehicle in a vehicle collision at a deceleration detector and applying the detected deceleration signal to a microcomputer;
(b) analyzing a collision waveform generated according to the deceleration signal and determining an impact degree of the vehicle at the microcomputer;
(c) temporarily stopping operation of the deceleration detector at the microcomputer while the collision waveform is increasing;
(d) initializing an initial collision waveform in a state that the operation of the deceleration detector is stopped, the initial collision waveform being inputted before the microcomputer stops the operation of the deceleration detector;
(e) re-operating the deceleration detector at the microcomputer, detecting again a variation of the deceleration of the vehicle at the deceleration detector, and applying the newly detected deceleration signal to the microcomputer; and
(f) when the collision waveform generated according to the applied deceleration signal reaches a set value, operating an air bag driving unit at the microcomputer to thereby expand the air bag,
whereby an expansion time of the air bag is reduced and close to a required time to fire (RTTF).

2. The method according to claim 1, wherein the step (b) further includes the step of determining whether or not the collision waveform reaches a set time range after a predetermined time elapses from a moment when the microcomputer starts to recognize the initial collision waveform.

3. The method according to claim 1 or 2, wherein the step (c) is carried out when the collision waveform reaches the set time range after the microcomputer starts to recognize the collision waveform.

4. The method according to claim 1, wherein the step (e) is carried out when the deceleration of the vehicle reaches 0 velocity digit.

5. The method according to claim 2, wherein the set time range is 20 ms to 30 ms.
